# EUROPÄISCHE PATENTSCHRIFT

(11) **EP 1 785 659 B1**
(45) Veröffentlichungstag und Bekanntmachung des Hinweises auf die Patenterteilung: **09.07.2008**
(21) Anmeldenummer: 05024694.1
(22) Anmeldetag: 11.11.2005
(51) Int. Cl.: F16L 55/179

(54) **Verfahren zum Sanieren von Abzweigleitungen von Kanalrohren**
Mehtod of restoring the branch lines of pipelines
Procédé de rénovation de lignes de branchement de canalisations

(43) Veröffentlichungstag der Anmeldung: 16.05.2007
(73) Patentinhaber: Brandenburger Patentverwertung GdbR., 76829 Landau (DE)
(72) Erfinder: Noll, Christian, Dipl.-Kfm., 67117 Limburgerhof (DE)
(74) Vertreter: Kesselhut, Wolf

(56) Entgegenhaltungen:
- EP-A- 0 740 102
- WO-A-00/55539
- DE-A1- 4 437 599
- DE-A1- 10 017 711
- US-A- 4 325 772

## Beschreibung

Die Erfindung betrifft ein Verfahren zum Sanieren von undichten Wänden an Abzweigleitungen von Kanalrohren, insbesondere von Hausanschlussleitungen, mit einem an die Innenwand der Leitung anpressbaren, mit einem härtbaren Kunstharz getränkten Faserschlauch, der an seinem der Innenwand der Leitung zugekehrten Umfang mit einem Klebemittel belegt ist, welches eine Verbindung zwischen dem ausgehärteten Faserschlauch und der Innenwand der Abzweigleitung bewirken soll.

Ein derartiges Verfahren ist aus der EP- A 740 102 bekannt. Dort wird als Klebemittel ein Epoxidharz verwendet. Es hat sich aber gezeigt, dass die dadurch hergestellte Verbindung über längere Zeit hinweg nicht ausreichend fest ist. Insbesondere bei sehr hoher Belastung, wie sie zum Beispiel dann auftritt, wenn der Kanal in regelmäßigen Abständen durch Hochdruckspülung gereinigt wird, kann sich die Auskleidung von der Innenwand der Abzweigleitung lösen. Dies hat zur Folge, dass einerseits Abwasser in das Erdreich austritt und zu Geruchsbelästigung führt und dass andererseits Grundwasser in das Kanalrohr eintritt, wodurch die Abwassermenge erhöht wird.

Die DE-A-44 37 599 beschreibt eine Auskleidungsmatte für die Kanalsanierung mit einer Glasfaser-Trägerschicht, die in einen zu sanierenden Kanal eingeführt und durch Überdruck an dessen Innenwand angepresst wird. Die Trägerschicht wird hierbei mittels einer Polyurethanmasse aus zwei Komponenten mit der Innenwand des zu sanierenden Kanals verklebt, von denen die eine Komponente Mikrokapseln enthält, die mit Hilfe eines elektrisch erwärmbaren Metallgeflechts aufschmelzbar sind, um die beiden Komponenten miteinander zu vermischen und nach dem Aushärten eine Verbindung zwischen Kanalwand und Auskleidungsmatte zu erhalten. Aufgrund des einzusetzenden Metallgeflechts sowie dem Einsatz von Mikrokapseln ist das beschriebene Verfahren vergleichsweise aufwändig und störanfällig. Zudem ergibt sich durch die lediglich aufplatzenden Mikrokapseln nur eine geringe Durchmischung der beiden Komponenten, wodurch die Klebeverbindung zwischen Kanalwand und Auskleidungsmatte beeinträchtigt wird.

Demgemäß lag der Erfindung die Aufgabe zugrunde, die Nachteile des Standes der Technik zu vermeiden und ein Verfahren zum Sanieren von undichten Wänden an Abzweigleitungen von Kanalrohren mit einem an die Innenwand der Leitung anpressbaren, mit einem durch UV-Licht härtbaren Polyester-, Vinylester- oder Epoxidharz getränkten Faserschlauch bereitzustellen, bei dem eine bessere Verbindung zwischen dem ausgehärteten Faserschlauch und der Innenwand der Leitung erreicht wird.

Diese Aufgabe wird erfindungsgemäß durch die Merkmale von Anspruch 1 gelöst.

Gegenstand der Erfindung ist demzufolge ein Verfahren zum Sanieren von undichten Wänden an Abzweigleitungen von Kanalrohren mit einem an die Innenwand der Leitung anpressbaren, mit einem härtbaren Harz getränkten Faserschlauch, der an seinem der Innenwand der Leitung zugekehrten Umfang mit einem Polyurethanharz belegt ist.

Der Faserschlauch weist einen an der Innenwand des Hauptkanalrohres anliegenden Kragen auf und hat somit die Form eines oben offenen Zylinderhutes. In der Fachsprache wird er als "Hutprofil" bezeichnet.

Der Faserschlauch wird hergestellt durch Tränken eines Glasfaservlieses oder eines Polyesternadelfilzes mit einem härtbaren Harz. Dieses ist vorzugsweise ein mit energiereichen Strahlen, insbesondere durch UV- Licht härtbares Polyester-, Vinylester oder Epoxidharz, das mit einem Eindickmittel, z.B. auf Basis von Magnesiumoxid, versehen ist. Der eingedickte und dadurch vorverfestigte Faserschlauch wird auf einem geeigneten Werkzeug zum Hutprofil geformt. Bevor das Klebemittel aufgetragen wird, führt man von unten in das Hutprofil einen aufblasbaren Gummiträger, z.B. aus Silikongummi ein, der die Form eines umgekehrten T hat und oben aus dem Hutprofil herausragt.

Dann wird das Hutprofil einschließlich des Kragens außen ganz oder teilweise mit dem Klebemittel belegt. Dieses ist erfindungsgemäß ein Polyurethanharz, vorzugsweise ein Zweikomponentenharz aus einem Polyetherpolyol oder einem Polyether/Polyester- Polyol und einem Düsocyanathärter, wobei auf 100 Gew.teile des Polyols 25 bis 40 Gew.teile Härter kommen. Vorzugsweise weist das Zweikomponentenharz direkt nach dem Zusammenrühren der beiden Komponenten eine Viskosität im Bereich von 2000 bis 6000 mPa.s, insbesondere von 3500 bis 4500 mPa.s auf. Das Polyurethanharz wird entweder durch Aufstreichen oder durch Spachteln auf das Hutprofil aufgetragen. Die Schichtdicke kann dabei zwischen 0,5 und 5 mm, insbesondere zwischen 1 und 3 mm liegen. Wenn die Viskosität zu hoch ist, ist das Harz zum Auftragen zu zäh, bei zu niedriger Viskosität kann es ablaufen. Innerhalb von einer halben bis einer Stunde sollte das Hutprofil in den Kanal eingeführt sein, da sonst eine vorzeitige Härtung einsetzt. Das Hutprofil kann nach bekannten Methoden in den Kanal eingeführt und mittels eines Kanalroboters ferngesteuert an die Innenwand der Abzweigleitung angelegt werden.

Dazu kann z.B. ein fahrbarer Teller dienen, wie er in der EP-A 740 102 beschrieben ist, oder ein Schildwagen mit einem nach oben gewölbten Aufsatz, auf dem das Hutprofil aufsitzt. Dieses ist, solange der harzgetränkte Faserschlauch zwar eingedickt, aber noch nicht ausgehärtet ist, dehnbar und elastisch, so dass es beim Einbringen in den Kanal umgelegt werden kann. Sobald es seine endgültige Position eingenommen hat, wird der Gummiträger aufgeblasen, vorzugsweise durch Luftdruck von 0,3 bis 1 bar, insbesondere von 0,5 bis 0,8 bar. Dadurch schmiegt sich das Hutprofil dicht an die Innenwand der Abzweigleitung an. Nun wird eine auf dem fahrbaren Teller oder in dem Schildwagen angebrachte Strahlenquelle, auf den eine oder mehrere UV- Lampen montiert sind, angeschaltet und die Härtung des Polyester- bzw. Vinylesterharzes setzt ein, die nach wenigen Minuten beendet ist. Gleichzeitig beginnt die Reaktion des Polyols mit dem Härter, die bei Raumtemperatur nach etwa 10 bis 20 Stunden weitgehend beendet ist. Eine Verkürzung der Härtungszeiten ist durch Erhöhung der Temperatur und durch Zusatz von Katalysatoren zum Polyurethanharz möglich. Die Verklebung mit dem Polyurethanharz ergibt eine feste, kraftschlüssige Verbindung zwischen dem ausgehärteten Faserschlauch und der Abzweigleitung. Nach beendeter Aushärtung wird die Gummiblase druckentlastet und kann herausgezogen werden.

Bei einer besonderen Ausführungsform der Erfindung wird die Sanierung der Abzweigleitung direkt im Anschluss an die Sanierung des Hauptkanalrohrs durchgeführt. Dazu wird auf bekannte Art und Weise das Kanalrohr mit einem harzgetränkten Faserschlauch ausgekleidet und das Harz wird ausgehärtet. Dann wird an der Eingangsstelle zur Abzweigleitung der ausgehärtete Faserschlauch mittels eines Roboters aufgeschnitten und die Abzweigleitung wird nach der vorliegenden Erfindung saniert.

## Patentansprüche

1. Verfahren zum Sanieren von undichten Wänden an Abzweigleitungen von Kanalrohren mit einem an die Innenwand der Leitung anpressbaren, mit einem durch UV- Licht härtbaren Polyester- Vinylester- oder Epoxidharz getränkten Faserschlauch, der an seinem, der Innenwand zugekehrten Umfang mit einem Klebemittel belegt ist, **dadurch gekennzeichnet, dass** das Polyester-, Vinylester- oder Epoxidharz durch Eindicken vorverfestigt wurde, und dass das als Klebemittel ein Polyurethanharz verwendet wird.

2. Verfahren nach Anspruch 1, **dadurch gekennzeichnet, dass** der Faserschlauch einen an der Innenwand des Hauptkanalrohres anliegenden Kragen aufweist und die Form eines oben offenen Zylinderhutes ("Hutprofil") hat.

3. Verfahren nach Anspruch 1, **dadurch gekennzeichnet, dass** das Polyurethanharz ein Zweikomponentenharz aus einem Polyetherpolyol oder einem Polyether/Polyester- Polyol und einem Diisocyanathärter ist.

4. Verfahren nach Anspruch 4, **dadurch gekennzeichnet, dass** das Zweikomponentenharz eine Viskosität im Bereich von 2000 bis 6000 mPa.s hat

5. Verfahren nach Anspruch 1, **gekennzeichnet durch** die folgenden Verfahrensschritte:
- Einbringen eines die Form eines umgekehrten T aufweisenden aufblasbaren Gummiträgers von unten her in den Faserschlauch,
- Einführen des Faserschlauchs in das Hauptkanalrohr und Anlegen desselben an die Innenwand der Abzweigleitung,
- Aufblasen des Gummiträgers in der Weise, dass sich der Faserschlauch dicht an die Innenwand der Abzweigleitung anschmiegt,
- Aushärten des Harzes **durch** Bestrahlung mit UV-Licht, und
- Aushärten des Polyurethanharzes.

6. Verfahren zum Sanieren von Kanalrohren und davon abgehenden Abzweigleitungen, **gekennzeichnet durch** die folgenden Verfahrensschritte:
- Auskleiden des Hauptkanalrohres mit einem harzgetränkten Faserschlauch und Aushärten des Harzes,
- Aufschneiden des ausgehärteten Faserschlauches an der Eingangsstelle zur Abzweigleitung, und
- Sanieren der Abzweigleitung nach Anspruch 1.

## Claims

1. Method for the rehabilitation of leaky walls of sewage pipe branches, using a fibre tube which can be pressed against the inner wall of the pipe, which has been soaked in UV-light-hardenable polyester, vinyl ester or epoxy resin, and is coated, on the periphery thereof facing the inner wall, with an adhesive, **characterised in that** the polyester, vinyl ester or epoxy resin is pre-solidified by thickening and **in that** a polyurethane resin is used as the adhesive.

2. Method according to claim 1, **characterised in that** the fibre tube has a collar, lying against the inner wall of the main sewage pipe, and is in the shape of an upwardly open top-hat (a "top-hat section").

3. Method according to claim 1, **characterised in that** the polyurethane resin is a two-component resin consisting of a polyether polyol or a polyether/polyester polyol and a diisocyanate hardener.

4. Method according to claim 4, **characterised in that** the two-component resin has a viscosity in the region of 2000 to 6000 mPa.s.

5. Method according to claim 1, **characterised by** the following method steps:
- inserting an inflatable rubber support, in the shape of an upside-down T, into the fibre tube from below,
- introducing the fibre tube into the main sewage pipe and applying said tube to the inner wall of the branch pipe,
- inflating the rubber support in such a way that the fibre tube presses tightly against the inner wall of the branch pipe,
- curing the resin via irradiation with UV light, and
- curing the polyurethane resin.

6. Method for the rehabilitation of sewage pipes and branch pipes stemming therefrom, **characterised by** the following method steps:
- lining the main sewage pipe with a resin-soaked fibre tube and curing the resin,
- cutting the cured fibre tube at the entrance to the branch pipe, and
- rehabilitating the branch pipe according to claim 1.

## Revendications

1. Procédé pour rénover des parois non étanches sur des conduites de dérivation de canalisations comprenant un flexible à fibre pouvant être comprimé sur la paroi intérieure de la conduite et imbibé avec une résine de polyester-ester de vinyle ou de résine époxy, durcissable par la lumière UV, lequel flexible est recouvert d'un agent adhésif sur son pourtour tourné vers la paroi intérieure, **caractérisé en ce que** la résine de polyester - ester de vinyle ou la résine époxy a été préconsolidée par épaississement et **en ce qu'**une résine de polyuréthane est utilisée comme agent adhésif.

2. Procédé selon la revendication 1, **caractérisé en ce que** le flexible à fibre présente une collerette adjacente à la paroi interne de la canalisation principale et a la forme d'un chapeau cylindrique ouvert en haut ("profilé de chapeau").

3. Procédé selon la revendication 1, **caractérisé en ce que** la résine de polyuréthane est une résine à deux composants à base d'un polyol de polyéther ou d'un polyol de polyéther/polyester et d'un durcisseur à base de diisocyanate.

4. Procédé selon la revendication 4, **caractérisé en ce que** la résine a deux composants a une viscosité de l'ordre de 2000 à 6000 mPa.s.

5. Procédé selon la revendication 1, **caractérisé par** les étapes de procédé suivantes :
- production d'un support caoutchouc gonflable, présentant la forme d'un T inversé, par en bas dans le flexible à fibre,
- introduction du flexible à fibre dans la canalisation principale et application de celui-ci sur la paroi intérieure de la conduite de dérivation.
- gonflage du support caoutchouc en ce sens que le flexible à fibre épouse de façon étanche la forme de la paroi interne de la conduite de dérivation,
- durcissement de la résine par irradiation à la lumière UV, et
- durcissement de la résine de polyuréthane.

6. Procédé pour la rénovation de canalisations et de conduites de dérivation partant de celles-ci, **caractérisé par** les étapes de procédé suivantes :
- revêtement de la canalisation principale avec un flexible à fibre imbibé de résine et durcissement de la résine,
- entaillage du flexible à fibre durci au point d'entrée de la conduite de dérivation, et
- rénovation de la conduite de dérivation selon la revendication 1.
